(19) Europäisches Patentamt
European Patent Office
Office européen des brevets

(11) **EP 1 521 069 B1**

(12) **EUROPÄISCHE PATENTSCHRIFT**

(45) Veröffentlichungstag und Bekanntmachung des Hinweises auf die Patenterteilung:
**29.06.2016  Patentblatt 2016/26**

(51) Int Cl.:
*G01J 3/51* *(2006.01)*       *G01J 1/42* *(2006.01)*

(21) Anmeldenummer: **04023051.8**

(22) Anmeldetag: **28.09.2004**

(54) **Photosensor zur normgerechten Farbmessung**

Colorimeter for true colour measurement

Colorimètre pour la mesure des vraies couleurs

(84) Benannte Vertragsstaaten:
**AT BE BG CH CY CZ DE DK EE ES FI FR GB GR HU IE IT LI LU MC NL PL PT RO SE SI SK TR**

(30) Priorität: **02.10.2003  DE 10346595**

(43) Veröffentlichungstag der Anmeldung:
**06.04.2005  Patentblatt 2005/14**

(73) Patentinhaber: **MAZeT GmbH**
**07745 Jena (DE)**

(72) Erfinder:
• **Grunert, Fred, Dr.**
**07639 Bad Klosterlausnitz (DE)**
• **Krumbein, Frank**
**99102 Windischholzhausen (DE)**

• **Siess, Gunter**
**07586 Kraftsdorf (DE)**

(74) Vertreter: **Freitag, Joachim et al**
**Patentanwälte**
**Oehmke & Kollegen**
**Neugasse 13**
**07743 Jena (DE)**

(56) Entgegenhaltungen:
**DE-A1- 2 920 773      DE-A1- 19 638 693**
**DE-U1- 20 315 422**

• **"MCS3AS 3-elementiger Farbsensor - SMD/SO8"**
**MAZET GMBH DATENBLATT, Bd. v1.11, Nr. DB-99-073, 7. Mai 2003 (2003-05-07), Seiten 1-5, XP002411191 Jena**

**Beschreibung**

Die Erfindung betrifft einen Photosensor zur Farbmessung auf Basis von drei Spektralanteilen, zu deren Erfassung der Sensorchip durch eine vorgelagerte Interferenzfilterstruktur drei unterschiedlich empfindliche Teilflächen aufweist, wobei die Teilflächen Messwerte bereitstellen, die in einem geeigneten Farbraum in Farbwerte umgesetzt werden, insbesondere für die hochgenaue Farbmessung (Punktmessung) bei der Prüfung und Sicherung der Farbkonstanz von technischen Oberflächen und beliebigen Konsumgütern.

Im Zuge der allgemeinen technisch-technologischen Entwicklung haben sich auch die Anforderungen an einfache Einzelfarbsensoren, Farbsensorarrays und Farbkameras stark erhöht. Das hängt einerseits mit gestiegenen Erwartungen an das Design (vor allem Farbkonstanz) von industriellen Produkten und Konsumgütern und andererseits mit den ständig steigenden Qualitätsansprüchen bei der Mensch-Maschine-Kommunikation zusammen. Insbesondere letzterer Teilbereich der Technik ist durch ständig steigende Ansprüche der modernen Medien allgemein und des e-Commerce im Besonderen geprägt und muss bei einer Vielzahl unterschiedlicher Display- und Druckersysteme befriedigende Ergebnisse liefern. Deshalb wird bei applikationsspezifisch jeweils unterschiedlichen Anforderungen an die Genauigkeit der Drang nach normgerechter Farmessung ("True Colour") immer größer.

Für die Farbmessung sind grundsätzlich drei unterschiedliche Methoden bekannt geworden:

- Vergleichsverfahren,
- Spektralverfahren und
- Dreibereichsverfahren.

Aus Aufwands- und Kostengründen wird vornehmlich auf das Dreibereichsverfahren zurückgegriffen, obwohl dieses mit wesentlichen Einschränkungen verbunden ist, weil damit im Ergebnis wellenlängenintegrale Farbwerte erhalten werden, die nur für die verwendete Beleuchtung gültig sind. So lassen sich Metamerie-Indizes beispielsweise nur durch eine Abfolge von Messungen bei unterschiedlichen Beleuchtungen (Bezugslichtart und Testlichtart), die stets physisch vorhanden sein müssen, bestimmen. Ein solcher Farbsensor ist aus der DE 19 638 693 bekannt.

Das grundlegende Prinzip eines spektral angepassten Halbleiter-Sensors ist bereits aus der US 3,996,461 bekannt. Dort wird für einen Silizium-Photosensor ein optisches Dünnschichtfilter auf Basis eines Interferenz-Mehrschichtsystems beschrieben, um die Empfindlichkeit des Sensors auf die spektrale Empfindlichkeit des menschlichen Auges zu beschränken. Das Interferenzfilter besteht aus einem Wechselschichtsystem von reinen $\lambda/4$-Schichten für die Wellenlängen von $\lambda$=550 nm, 780 nm und 1000 nm. Dabei sind die hochbrechenden Schichten aus Titanoxid und die niedrigbrechenden Siliziumoxid. Das resultierende Filtersystem entspricht einer Y-Charakteristik der spektralen Empfindlichkeitskurve des menschlichen Auges, ohne dass damit eine spektral selektive Auflösung des Farbspektrums im Sinne der Zuordnung von Farbwerten oder Normspektralfarben möglich ist, da die Filterschichten nicht strukturiert sind, sondern auf mehrere Sensorelemente zugleich aufgetragen werden.

In der US 5,246,803 sind strukturierte dichroitische Filter für festkörperelektronische Bildsensoren offenbart, die durch abwechselnde Ablagerung auf die Sensoroberfläche oder eine Glasschicht erfolgen. Dabei wurde die wechselnde Abscheidung von $SiO_2$- und $TiO_2$-Schichten unter Vakuumbedingungen und niedriger Temperatur zur Erzeugung von Farbfiltern beschrieben, wobei die spektrale Charakteristik der Filter durch die Anzahl und Dicke der Schichten gesteuert und die Formung und Ablagerung der Schichten beliebig oft wiederholt wird, um Rot-, Grün-und Blaufilter zu erzeugen. Gemäß US 5,246,803 wird z.B. bei einem Wechselschicht-Filterstapel für das Blaufilter ein Durchlassbereich ("on-band region" mit ca. 80 % Transmission) mit 400-500 nm erzeugt, während der Reflexionsbereich ("off-band region" mit weniger als 5 % Transmission) zwischen 500 und 700 nm beträgt.

Nachteilig an dieser Lösung ist, dass es sich um reine Bandpass- bzw. Kantenfilter handelt, so dass Punktmessungen bei schmalbandigen Farbreizen im off-bandBereich der Farbfilter regelmäßig zur Messung von verfälschten Farbwerten führen oder eine spezielle Bezugslichtkalibrierung benötigen.

Der Erfindung liegt die Aufgabe zugrunde, eine neue Möglichkeit zur Farbmessung auf Basis eines Dreibereichsverfahrens mit drei, durch vorgelagerte unterschiedlich spektral selektive Interferenzfilter erzeugten Farbmesswerten zu finden, die mit einfachen Mitteln eine nahezu normgerechte Echtfarben-Messung ohne aufwendige Bezugslichtkalibrierung gestattet.

Erfindungsgemäß wird die Aufgabe bei einem Photosensor zur Farbmessung auf Basis von drei Spektralanteilen, zu deren Erfassung ein Sensorchip mindestens drei durch eine vorgelagerte Interferenzfilterstruktur unterschiedlich spektral empfindliche Teilflächen mit dazwischen liegenden passiven Stegen aufweist, wobei die Interferenzfilterstruktur drei unterschiedliche Wechselschichtsysteme aus Siliziumdioxid und Titandioxid zum selektiven Transmittieren einfallenden Lichts in die unterschiedlichen Teilflächen des Sensorchips beinhaltet und die Teilflächen separate Farbmesswerte bereitstellen, dadurch gekennzeichnet, dass die mit unterschiedlichen Interferenzfiltern bedeckten Teilflächen , die an die Normspektralfunktionen des menschlichen Auges für drei verschiedene Koordinaten eines normierten Farbraumes angepasst sind, jeweils kreissektorförmig um einen Zentralpunkt verteilt sind, um für einen dem Zentralpunkt zugeordneten Ort einfallenden Lichts ein Tripelfarbsegment zur Erfassung der drei Farbkoordinaten des Farbraumes zu bilden, und jedes Interferenzfilter ein in seiner Transmissionscharakteristik über die Wellenlänge des spektral zu messenden Lichts der Empfindlichkeit des menschlichen Auges derart angepasst ist, dass das Produkt aus Basisempfindlichkeit des Photosensors und Transmission des Interferenzfilters proportional dem Normalspektralwertverlauf des menschlichen Auges für die betreffende Koordinate des Farbraumes ist, so dass die durchgelassenen Spektralanteile in den Teilflächen Messwerte erzeugen, die bei einfacher Skalierung zueinander in Spektralfarbwerte im normierten Farbraum umsetzbar sind.

Dadurch dass das Produkt aus der Basisempfindlichkeit des Photosensors (Photodiode) und Transmissionscharakteristik jedes Interferenzfilters proportional dem Normalspektralwertverlauf des menschlichen Auges für die betreffende Koordinate des Farbraumes ist, entspricht die spektrale Empfindlichkeit des erfindungsgemäßen Photosensors nahezu exakt dem Farbempfinden des menschlichen Auges und ermöglicht die Separation von Farbunterschieden in gleicher und besserer Qualität wie das menschliche Auge.

Bei der technologischen Umsetzung eines als computersimuliertes Wechselschichtsystem (mit alternierenden Schichten aus $TiO_2$ und $SiO_2$ unterschiedlicher Schichtdicken) ideal angepassten Interferenzfilters für die jeweilige Farbkoordinate im Farbraum wird die Transmissionscharakteristik jedes Interferenzfilters zweckmäßig mit einer Toleranz der Schichtdicken von weniger als 2 % hergestellt.

Da die Einhaltung deutlich geringerer Schichtdickentoleranzen (etwa < 1 %) aus technologischer Sicht derzeit unrealistisch ist, wird - soweit das die Genauigkeit der Farbmessung für die gewünschte Anwendung erfordert zur Kompensation der herstellungsbedingten Schichtdickenabweichungen eine lineare Korrektur der von den Teilflächen ausgegebenen Messwerte vorgenommen. Das kann zum einen durch eine globale Matrizierung zur Korrektur der ausgegebenen Messwerte für den gesamten Farbraum und zum anderen - bei gesteigerten Genauigkeitsanforderungen, z.B. zur Ausgabe von genauen Farbmaßzahlen - durch lineare Korrektur der ausgegebenen Messwerte mittels lokaler Matrizierung geeigneter Tetraederbereiche des Farbraumes geschehen.

Für die Realisierung einer kompakten Bauweise des Farbsensors ist es von Vorteil, dass die Interferenzfilter direkt auf den Halbleiterdioden des Sensorchip aufgebracht sind. Dabei werden die Interferenzfilter vorzugsweise direkt auf Siliziumdioden des Sensorchip aufgebracht. Am besten sind die Si-Dioden dazu in einer speziell für den visuellen Spektralbereich angepassten PIN-Dioden-Technologie hergestellt worden, um bereits eine vorteilhafte Basisempfindlichkeit der Si-Dioden des gesamten Sensorchip zu erreichen. In diesem Fall ergibt sich der besondere Zusatzvorteil, dass die Alterung und Temperaturabhängigkeit des Gesamtsystems aus Photodiode und Interferenzfilter vernachlässigbar sind. Weiterhin ist es für bestimmte Genauigkeitsklassen sogar möglich, die Photoströme als ausgelesene Farbmesswerte direkt in einen genormten Farbraum zu überführen.

Die Interferenzfilter können aber auch zweckmäßig auf Si-Dioden aufgebracht werden, die in einer auf den visuellen Spektralbereich angepassten CMOS-Technologie hergestellt wurden.

Weiterhin können die Interferenzfilter aber auch auf einem Sensorchip mit Germaniumdioden oder mit Dioden auf Basis von InGaAs aufgebracht sein.

Unter technologischen Aspekten der einzuhaltenden Schichtdickentoleranzen, d.h. um bei Toleranzüberschreitungen nicht den gesamten Sensorchip zu verderben, können die Interferenzfilter über den Si-Dioden (Teilflächen) des Sensorchip auch vorteilhaft auf einer separaten Glasplatte aufgebracht werden oder auch durch Anwendung von Lift-Off-Techniken eingesetzt werden.

Für Remissionsmessungen von Oberflächen, bei denen eine gleichmäßige Ausleuchtung des Photosensors gegeben ist, sind die aufgrund aufgebrachter Interferenzfilter unterschiedlich empfindlichen Teilflächen auf dem Sensorchip vorzugsweise als Kreissegment (Kreisflächendrittel) geformt und um einen Zentralpunkt gleichverteilt angeordnet.

Eine weitere Ausgestaltung, mit der eine Skalierung der spektralen Charakteristiken der Teilflächen des Photosensors auf die Empfindlichkeitsverteilung des Auges mindestens teilweise hardwaremäßig realisierbar ist, besteht darin, dass die mit den angepassten Interferenzfiltern bedeckten, unterschiedlich empfindlichen Teilflächen auf dem Sensorchip als Kreisflächensektoren unterschiedlichen Flächeninhalts um einen Zentralpunkt angeordnet sind, wobei die unterschiedlichen Flächeninhalte darauf abgestimmt sind, dass eine niedrigere Basisempfindlichkeit einer Teilfläche, die aufgrund eingeschränkter Wellenlängen-Transmission des zugehörigen Interferenzfilters zustande kommt, durch einen entsprechend größeren Flächeninhalt der Teilfläche des Photosensors kompensiert wird.

Als weitere zweckmäßige Form der Teilflächen des Photosensors sind die mit unterschiedlichen Interferenzfiltern beschichteten Teilflächen in Form von Rhomben mit 120°-Winkel gleichverteilt um einen Zentralpunkt angeordnet, so dass sie als ein Tripelfarbsegment ein regelmäßiges Sechseck bilden.

Diese sechseckigen Tripelfarbsegmente lassen sich vorteilhafte jeweils um eine Vielzahl von Zentralpunkten mit gleichen Stegen und gleichverteilt geordnet auf dem Sensorchip aufbringen, so dass die Tripelfarbsegmente eine Wabenstruktur bilden, wobei Teilflächen gleicher spektraler Empfindlichkeit keine benachbarten Seitenkanten miteinander haben.

Mit dem erfindungsgemäßen Photosensor ist es möglich, Farbmessungen auf Basis eines Dreibereichsverfahrens mit drei, durch unterschiedlich spektral selektive Interferenzfilter erzeugten Farbmesswerten zu realisieren, die mittels an die Normspektralfunktion des menschlichen Auges angepasster Interferenzfilter eine nahezu normgerechte Echtfarben-Messung ohne aufwendige Bezugslichtkalibrierung gestattet. Im Ergebnis können Farbunterschiede in mit dem menschlichen Auge vergleichbarer Qualität separiert werden. Weiterhin sind die gemessenen Photoströme der drei Teilflächen des Sensors für bestimmte Genauigkeitsklassen der Farbmessung direkt in genormte Farbräume überführbar. Mit der Erfindung lassen sich preiswerte Farbsensoren realisieren und in leistungsfähige kompakte Farbmessgeräte integrieren.

Die Erfindung soll nachstehend anhand von Ausführungsbeispielen näher erläutert werden. Die Zeichnungen zeigen:

Fig. 1: eine Gestaltung des erfindungsgemäßen Photosensors zur Farbmessung in schematischer Schnittdarstellung,

Fig. 2: eine Prinzipdarstellung der Transmissionsfunktionen des erfindungsgemäßen Dreifiltersystems für die unterschiedlichen Koordinaten im CIE-Farbraum als Adaption an die Normalspektralwertfunktion des menschlichen Auges,

Fig. 3: ein Schema der Basisempfindlichkeit des Sensormaterials,

Fig. 4: eine Darstellung des idealen Transmissionsgrades der Interferenzfilter unter Berücksichtigung der Basisempfindlichkeit des Photosensors,

Fig. 5: eine erste Variante des erfindungsgemäßen Farbsensors (Draufsicht) als Einzelsensor mit drei durch unterschiedliche Interferenzfilterfunktionen verschieden empfindlichen Teilflächen,

Fig. 6: eine zweite Ausgestaltung des erfindungsgemäßen Farbsensors als Mehrelementsensor mit einer Vielzahl von Tripelfarbelementen in einer Wabenstruktur,

Fig. 7a: ein optimiertes Interferenzfilter aus einem $SiO_2$- und $TiO_2$-Wechselschicht-system für die adaptierte Rotempfindlichkeitsfunktion des Photosensors als X-Koordinate des Farbraumes,

Fig. 7b: ein optimiertes $SiO_2/TiO_2$-Interferenzfilter für die adaptierte Grünempfindlich--keitsfunktion des Photosensors (Y-Koordinate im Farbraum),

Fig. 7c: ein optimiertes $SiO_2/TiO_2$-Interferenzfilter für die adaptierte Blauempfindlich-keitsfunktion des Photosensors (Z-Koordinate im Farbraum),

Fig. 8a: die spektrale Transmission (oder Remission) eines schmalbandigen Modelltargets mit 15 nm spektraler Breite und 1/e-Abfall für eine Schwerpunktwellenlänge von 555 nm,

Fig. 8b: den Maximalwert von $\Delta E$ über alle Schwerpunktwellenlängen als Funktion der Filterkurvenverschiebung des Modelltargets nach Fig. 8a,

Fig. 8c: das Gesamtresultat der Fehlerrechnung als Funktion der Schwerpunktwellenlänge und der Verschiebung der Filterfunktion des Modelltargets nach Fig. 8a,

Fig. 9a: die spektrale Transmission (oder Remission) eines Modelltargets mit 40 nm spektraler Breite und 1/e-Abfall für die Schwerpunktwellenlänge von 555 nm,

Fig. 9b: den Maximalwert von $\Delta E$ über alle Schwerpunktwellenlängen als Funktion der Filterkurvenverschiebung des Modelltargets nach Fig. 9a,

Fig. 9c: das Gesamtresultat der Fehlerrechnung als Funktion der Schwerpunktwellenlänge und der Verschiebung der Filterfunktion des Modelltargets nach Fig. 9a,

Fig. 10a: Remissionsgrad eines Modelltargets mit rampenförmigem Remissionsverlauf mit einer Breite des Übergangsbereiches von 50 nm,

Fig. 10b: Maximale Farbabweichung für Modelltargets gemäß Fig. 10a als Funktion der Verschiebung der X-Filterkurve,

Fig. 10c: Gesamtergebnis der Fehlerrechnung bei Verschiebung der X-Filterfunktion für Targets,

Fig. 11a: Remissionsgrad eines Modelltargets mit rampenförmigem Remissionsverlauf mit einer Breite des Übergangsbereiches von 50 nm bei geringerem Farbkontrast,

Fig. 11b: Maximale Farbabweichung für Modelltargets nach Fig. 11 a als Funktion der Verschiebung der X-Filterkurve,

Fig. 11c: Gesamtergebnis der Fehlerrechnung bei Verschiebung der X-Filterfunktion für Targets gemäß Fig. 11 a,

Fig. 12a: Maximale Farbabweichung für 15 nm breite. Farbreize als Funktion der Verschiebung der X-Filterkurve, ermittelt für herkömmliche Sensoren mit Drei-Bandpass-Filtersystem (hier: MSC3-Sensor der Fa. MAZeT, DE),

Fig. 12b: Gesamtergebnis der Fehlerrechnung bei Verschiebung der X-Filterfunktion für 15 nm Spektralbreite des Farbreizes (gemäß Fig. 8a), ermittelt für herkömmliche Sensoren mit Drei-Bandpass-Filtersystem (MSC3-Sensoren).

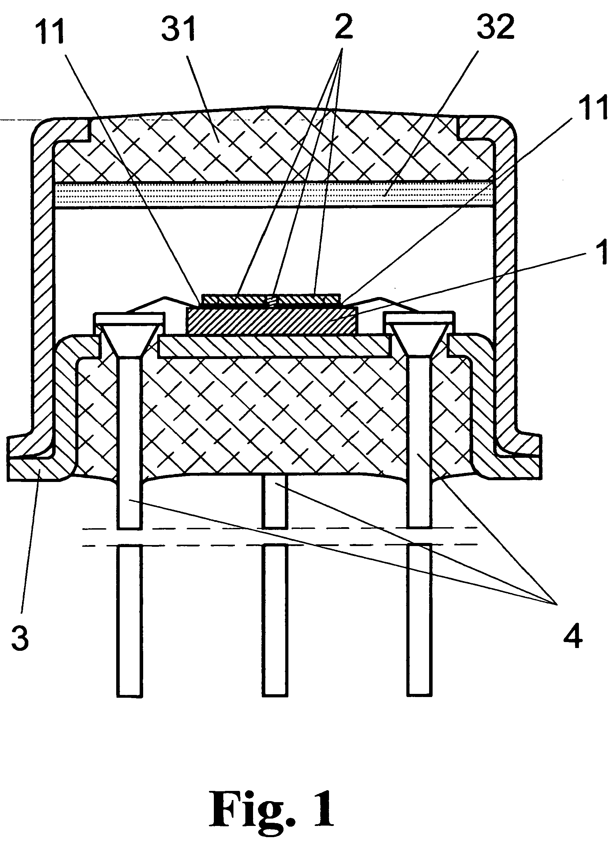

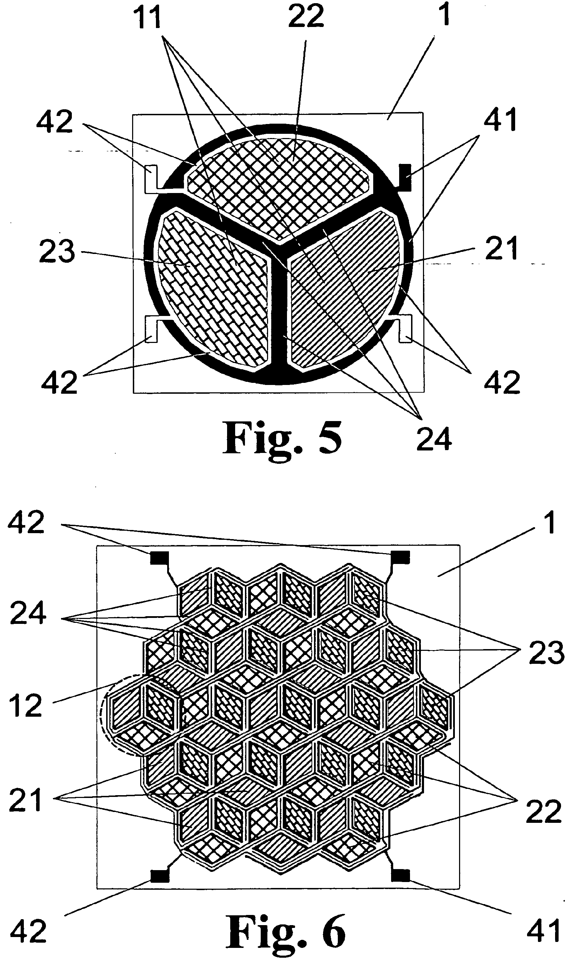

Der erfindungsgemäße Farbsensor besteht in seinem Grundaufbau - wie in Fig. 1 schematisch dargestellt - aus einem Sensorchip 1 mit photoempfindlichen Teilflächen 11, und einer Interferenzfilterstruktur 2 mit spektral unterschiedlich empfindlichen Interferenzfiltern 21, 22, und 23 (nur in Fig. 5 und 6 bezeichnet) einem Gehäuse 3 mit Eintrittsfenster 31 und darauf vorhandener Infrarotfilterschicht 32 sowie den Anschlusselektroden 4.

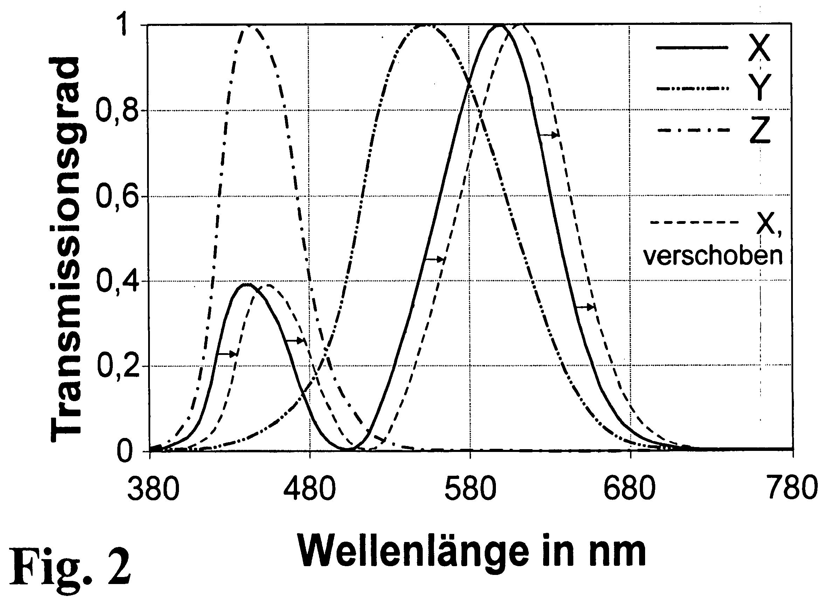

Das Interferenzfiltersystem 2 weist jeweils als Tripelelement drei unterschiedlich dimensionierte Wechselschichtsysteme aus Siliziumdioxid- und Titandioxidschichten auf, deren spektrale Transmission an die Normspektralfunktionen des menschlichen Auges angepasst sind. Fig. 2 zeigt die normierten Normspektralfunktionen der Interferenzfilter 21, 22 und 23 für die jeweilige Koordinate des gewählten CIE-Farbraumes.

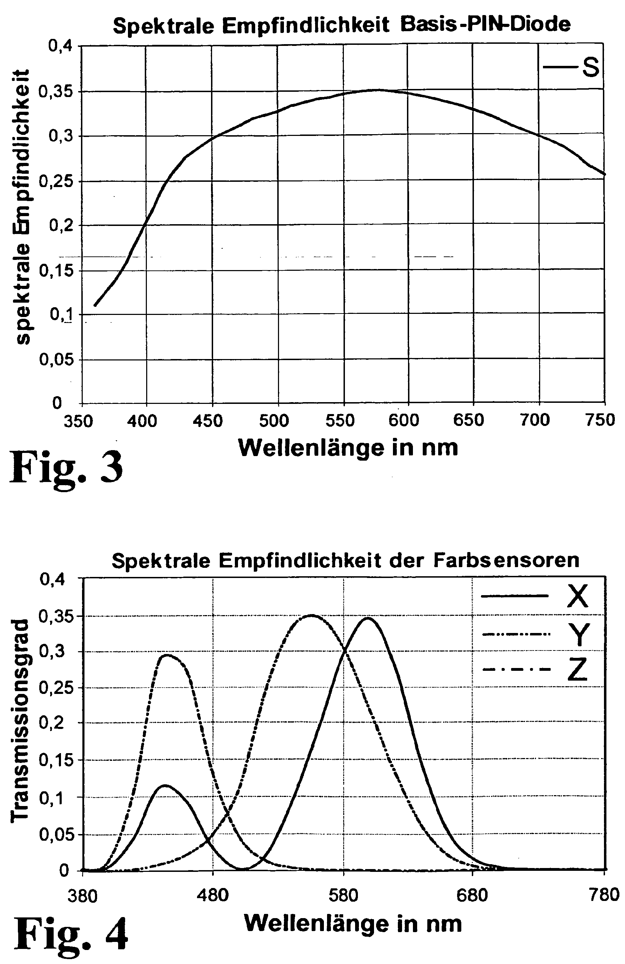

Die spektrale Transmission der Interferenzfilter 21, 22 und 23 wird so bemessen, dass das Produkt aus Basisempfindlichkeit S (in Fig. 3 dargestellt für Si-Dioden nach PIN-Technologie) und Transmissionscharakteristik des jeweiligen Interferenzfilters 21, 22 oder 23 proportional dem gewünschten Normalspektralwertverlauf ist. Als spektrale Gesamtempfindlichkeit des Farbsensors wird also stets das Produkt aus Basisempfindlichkeit S und Filtertransmission X, Y, Z verwendet, wie es in Fig. 4 für einen speziellen Fall (auf Basis von Fig. 3) dargestellt ist.

Im Folgenden wird - ohne Beschränkung der Allgemeinheit - angenommen, dass das Basismaterial des Sensorchip 1 mit Si-Dioden bestückt ist, die in einer speziell für den visuellen Spektralbereich angepassten PIN-Dioden-Technologie hergestellt wurden und somit in ihrer spektralen Empfindlichkeit der des menschlichen Auges am besten angenähert sind. Die Empfindlichkeitskurve einer so gefertigten PIN-Diode zeigt in Fig. 3. Bei ähnlich geformter Basisempfindlichkeit S können anstelle von Si-Dioden auch Ge- oder InGaAs-Dioden verwendet werden.

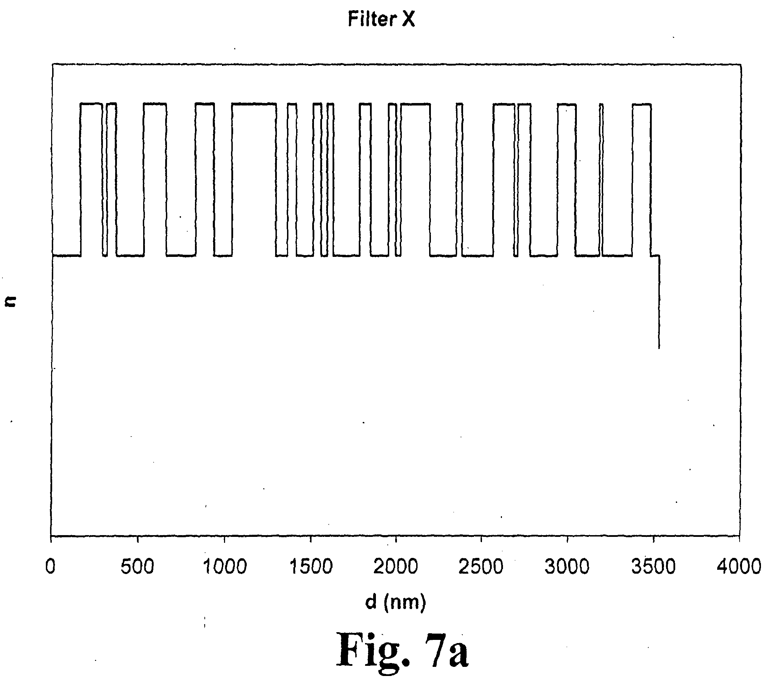

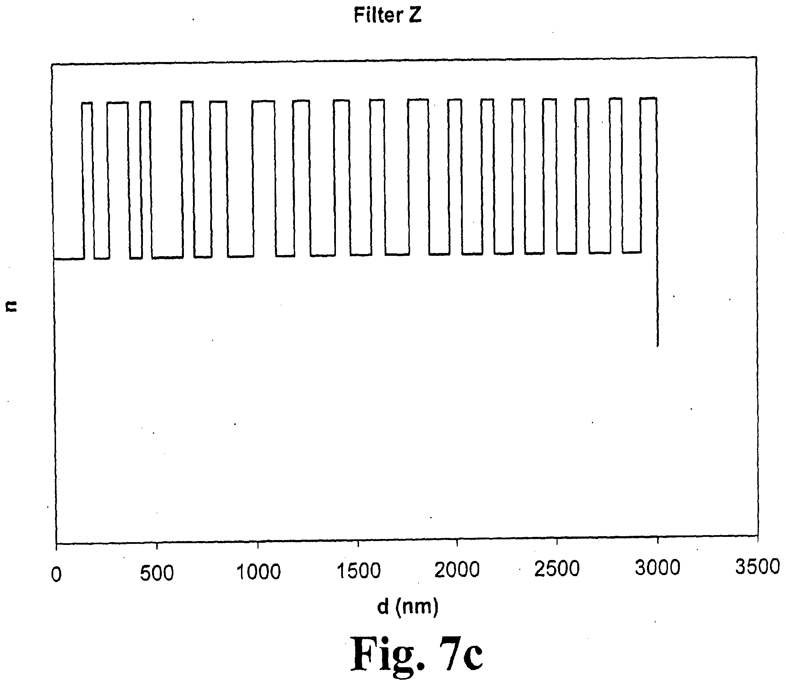

Fig. 4 stellt die gesamte spektrale Empfindlichkeitsverteilung des Farbsensors dar, wenn die Interferenzfilterstruktur 2 mit ihren drei unterschiedlichen Interferenzfiltern 21, 22 und 23 für die X-, Y- und Z-Komponenten auf einem Sensorchip 1 gemäß der Empfindlichkeitsfunktion von Fig. 3 (z.B. auf Basis von PIN-Dioden aufgebracht ist. Um die in Fig. 4 gezeigten resultierenden Transmissionsverläufe des Farbsensors in den drei Koordinaten des Farbraumes zu erhalten, sind die Interferenzfilter 21, 22 und 23 geeignet bezüglich der Schichtdicken der Wechselschichten zu variieren. Ein solches geeignet optimiertes zusammengehöriges System von Interferenzfiltern 21, 22, 23 ist z.B. in den Fig. 7a (X-Filter), 7b (Y-Filter) und Fig. 7c (Z-Filter) für die Koordinaten des Farbraumes angegeben.

Fig. 5 zeigt eine Variante des Sensorchip 1 für ein punktuell messfähigen Farbsensor. Dabei ist die schwarze Fläche die Katode 41 des kompletten Tripelelements des Farbsensors. Die weißen Bereiche stellen die Anoden 42 der drei Teilflächen 11 des Photosensors dar, von denen die auftretenden Photoströme als Messwerte abgeleitet werden. Die gestreifte Teilfläche 11 soll in dem gewählten Fall die mit dem Interferenzfilter 21 erzeugte X-Transmissionsfunktion (gemäß Fig. 2) aufweisen, während die karierte und die ziegelgemusterte Teilfläche 11 die Y- bzw. Z-Transmissionsfunktionen der Interferenzfilter 22 und 23 (nach Fig. 2) symbolisieren.

Eine besondere Gestaltung des erfindungsgemäßen Farbsensors für flächige Farbmessungen ist in Fig. 6 in einer Draufsicht auf den Sensorchip 1 dargestellt. Hier weist der Sensorchip 1 mehrere wabenförmige Tripelelemente 12 auf, die jeweils aus drei Si-Dioden mit den unterschiedlichen Interferenzfilter 21, 22 und 23 bestehen. Die Tripelelemente 12 sind dabei so zueinander angeordnet, dass ein Interferenzfilter 21, 22 oder 23 keine gemeinsame Kante mit demselben Interferenzfilter 21, 22 oder 23 jedes der benachbarten Tripelelemente 12 hat. Dadurch ergibt sich eine regelmäßige Struktur auf dem gesamten Sensorchip 1, die in der Lage ist, eine Messung der Gleichmäßigkeit eines Farbeindrucks einer Oberfläche vorzunehmen.

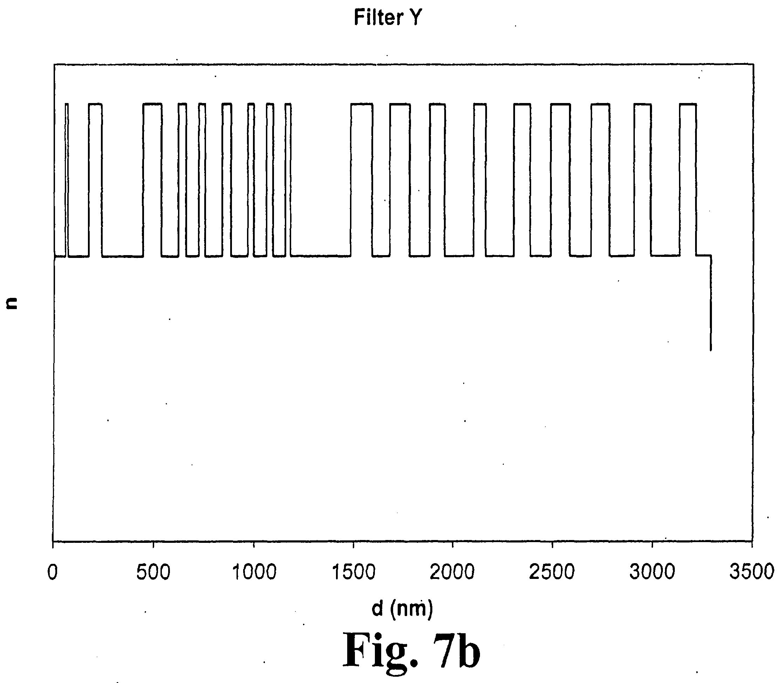

Wie Fig. 7a zu entnehmen werden kann, ist die Abfolge der alternierenden Schichten des Wechselschichtsystems des X-Filters des Farbsensors- (Teilfläche 11 für die anzupassende Spektralfunktion der Rotempfindlichkeit des menschlichen Auges besonders wechselhaft bezüglich der Schichtdicken. Das hat seine Ursachen in dem gleichfalls komplizierten Verlauf der anzunähernden spektralen Transmissionsfunktion, die gemäß der durchgezogenen Linie für die X-Koordinate des Farbraumes in Fig. 2 angeglichen wurde. Etwas regelmäßiger ist das Interferenzfilter 22, angegeben in Fig. 7b als Wechselschichtsystem für das Y-Filter des Farbsensors, gestaltet, das dem grünen Farbempfinden des menschlichen Auges zugeordnet ist. Demgegenüber vermittelt das Interferenzfilter 23 für das blaue "Farbempfinden des Farbsensors", angenähert durch das in Fig. 7c angegebene Z-Filter, eine nahezu regelmäßige Struktur des Wechselschichtsystems aus $SiO_2$ und $TiO_2$. die Optimierung der gesamten Filterstruktur 2 aus den Interferenzfiltern 21, 22 und 23 wurde vom Standpunkt einer begrenzten Gesamtschichtdicke betrieben, um eine möglichst hohe Gesamttransmission der Interferenzfilterstruktur 2 zu erhalten. Deshalb wurde die Schichtdicke d der einzelnen Interferenzfilter 21, 22 und 23 mit kleiner 4 $\mu$m angesetzt und vorzugsweise mit 3000 nm $\leq$ d $\leq$ 3500 nm vorgegeben.

Die durch rechnergestützte Optimierung (der zur Annäherung der Normspektralfunktion des Auges geforderten Transmissionsfunktionen) errechneten Interferenzfilter 21, 22 und 23 weisen zwischen 30 und 40 Schichten auf. Im in Fig. 7a-c dargestellten Beispiel enthält das X-Filter 35, das Y-Filter 37 und das Z-Filter 34 alternierende Schichten aus $TiO_2$ und $SiO_2$.

Die so berechneten Interferenzfilter 21, 22 und 23 können zum einen durch plasmagestütztes Beschichten (nach Auftrag einer Passivierungsschicht) direkt auf die Si-Dioden des Sensorchip 1 aufgebracht werden. Andererseits können sie - zur Vermeidung der Vergeudung von wertvollem Halbleitermaterial bei nicht eingehalten Schichttoleranzen für die komplizierten Interferenzfilterstruktur 2 - aber auch auf ein Glassubstrat aufgetragen oder mit Lift-Off-Techniken hergestellt und nachträglich über dem Siliziumchip justiert werden.

Die weiteren Ausführungen beschäftigen sich mit der erzielbaren Genauigkeit der Farbmessung für eine erfindungsgemäß einzuhaltende Toleranz der Schichtdicken von weniger 2%. Es wurde herausgefunden, dass eine variierte Schichtdicke in dieser Größenordnung im Wesentlichen lediglich eine Verschiebung der theoretisch berechneten Filterfunktion um maximal ± 12 nm (bei 600 nm) bewirkt. Diese Verschiebung infolge von Schichtdickenvarianzen ist zusätzlich in Fig. 2 als gestrichelte Linie für die X-Filterfunktion eingezeichnet worden, diese Auswirkung bei einer Schichtdickenabweichung des Interferenzfilters 21 darzustellen.

Bei den folgenden Betrachtungen ist stets die Umsetzung der Messwerte des Dreibereichs-Photosensors in einen normierten CIE-Farbraum vorgesehen. Ein Überblick über die Eigenschaften von CIE-Farbräumen kann den Vorschriften der ISO 7724 (bzw. DIN 5033) entnommen werden. Zur Fehlerabschätzung wird - ohne Beschränkung der Anwendung der Erfindung mit anderen CIE-Farbräumen - der LAB-Farbraum genutzt. Man beachte, dass im CIELAB-Raum aufgrund der Nichtlinearität keine sinnvolle Normierung der Farbwerte wie im XYZ-Raum möglich ist.

Zur Darstellung eines selbstleuchtenden Objekts benötigt man dessen Leuchtdichte in Bezug auf die Hintergrundleuchtdichte. Es fällt jedoch ohne weitere Information schwer, einen repräsentativen Wert für die Leuchtdichte vorzugeben. Daher werden häufig nur remittierte und transmittierte Farbreize angenommen. Selbstleuchtende Farbreize sind deshalb vorteilhaft als Körperfarbe umzudeuten, indem man z.B. dessen Emissionsspektrum auf Werte ≥ 1 skaliert und somit als Transmissionsspektrum eines äquivalenten Filters interpretiert.

Eine Skalierung, d.h. ein Abgleich der Sensorkanäle zueinander (d.h. ein Weißabgleich der Signale/Messwerte der Teilflächen 11 des dreikanaligen Photosensors auf die Normspektralfunktionen des menschlichen Auges), ist selbstverständlich unerlässlich. Außer dieser Skalierung soll unter Normalbedingungen keine Korrektur der Messwerte erforderlich sein.

### Erstes Beispiel

Ein schmalbandiger Farbreiz kann als spektrales Bandpass-Interferenzfilter simuliert werden, wobei ein typisches Maß für die spektrale Bandbreite eines herkömmlichen Interferenzfilters mit 15 nm angenommen werden kann.

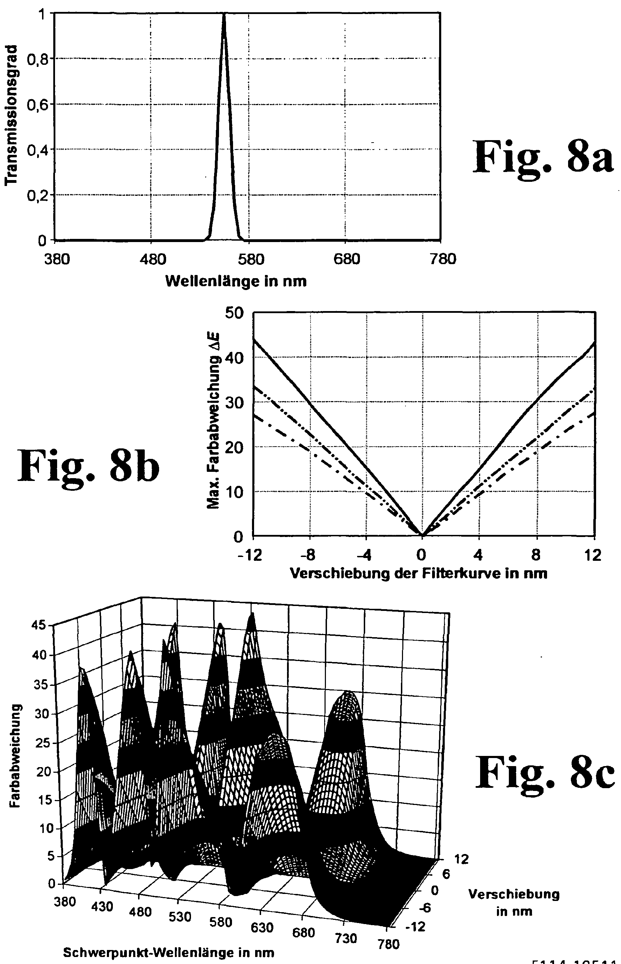

[0038] - Fig. 8a zeigt die spektrale Transmission (oder Remission) eines solchen Objekts für eine Schwerpunktwellenlänge von 555 nm. Für ein solches Modelltarget wird der Transmissionsgrad mit 15 nm spektraler Breite und einem 1/e-Abfall angesetzt und mit variabler Schwerpunktwellenlänge untersucht. Gegenüber einer Solllage von 555 nm wird zur Fehlerabschätzung die Filterkurve von 12 nm bis +12 nm in 0,5 nm-Schritten verschoben und dabei für jede Verschiebung ΔE des Emissionsspektrums von Sollfarbe und gemessener Farbe im CIELAB-Raum ermittelt, und zwar in Abhängigkeit von der Schwerpunktwellenlänge der Solltransmission. Der Maximalwert von ΔE über alle Schwerpunktwellenlängen wurde als Funktion der Filterkurvenverschiebung in Fig. 8b eingetragen.

Das Gesamtresultat der Fehlerrechnung ist in Fig. 8c als Funktion der Schwerpunktwellenlänge und der Verschiebung der Filterfunktion des Modelltargets im CIELAB-Raum für den Fall veranschaulicht, dass nur die X-Filterfunktion verschoben wurde. Im Ergebnis ist die gemessene Farbabweichung für jede Schwerpunktwellenlänge etwa proportional zum Betrag der Filterkurvenverschiebung. Für Y und Z-Verschiebungen ergeben sich qualitativ gleichwertige Ergebnisse. Lokale Maxima der Farbabweichungen, die in der Größenordnung mit dem absoluten Maximum vergleichbar sind, haben ihre Schwerpunktwellenlänge etwa an den Wendepunkten der Filterfunktion. Diese Aussage ist für transmittierende und reflektierende Objekte anwendbar, wobei maximale Helligkeit angenommen wurde, da der CIELAB-Raum größere Helligkeit mit größerem Farbabstand bewertet.

### Zweites Beispiel

LED's können durch Vorgabe eines Transmissionsfilters mit einer Filterbreite von 40 nm simuliert werden, weil damit das spektrale Verhalten von typischen LED's gut angenähert wird. Es wird also ersatzweise von einem Objekt mit entsprechender Transmission ausgegangen.

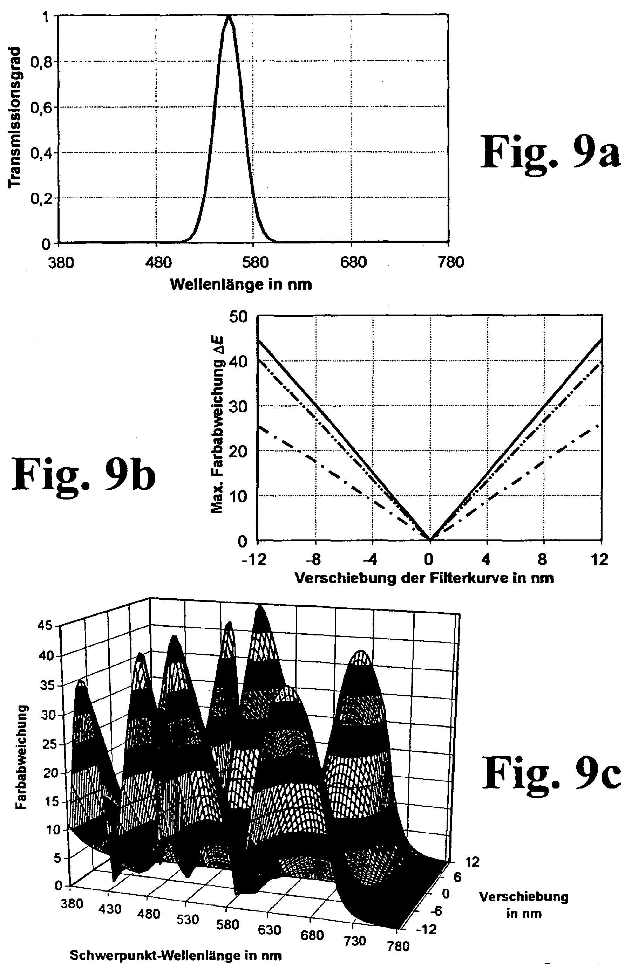

Das Ergebnis für ein solches Modelltarget mit 40 nm spektraler Breite ist dem der Filterfunktion mit 15 nm Bandbreite sehr ähnlich, wie Fig. 9a zu entnehmen ist. Somit kann unterstellt werden, dass die Farbverschiebung - zumindest im dazwischen liegenden Spektralintervall - nahezu unabhängig von der spektralen Breite des Modelltargets ist und bei gegebenen Testobjekt praktisch linear zur Verschiebung der X-, Y- oder Z-Filterkurve ist. Damit ist eine einfache Rückrechnung von vorgegebenen Farbmessfehlern auf die sekundären Toleranzen möglich, da innerhalb der linearen Näherung gearbeitet werden kann.

Bei einer Dickentoleranz von ± 2 % je Schicht des Filtersystems kann - wie Variationsrechnungen ergeben - eine maximale Kurvenverschiebung von ca. ± 12 nm auftreten. Bei einer solchen Verschiebung werden schon deutlich spürbare Farbabweichungen gemessen, wie aus Fig. 8b und 9b ersichtlich. Um schmalbandige Farbreize mit hoher Genauigkeit messen zu können, wäre eine Verringerung der Fertigungstoleranzen etwa um den Faktor 10 erforderlich. Da diese Forderung jedoch unrealistisch ist, muss - wenn eine hochgenaue Farbmessung das Ziel ist - bei fehlerhaften Filterkurven linear korrigiert werden (Matrizierung, möglichst lokal).

Drittes Beispiel

Bei standardisierten Testfarben kann die spektrale Remission häufig durch eine "steigende" Rampenfunktion angenähert werden, wobei die Rampenfunktion gekennzeichnet ist durch:

- ein Intervall mit konstanter minimaler Remission,
- ein folgendes Intervall mit positivem Anstieg und
- ein anschließendes Intervall mit konstanter maximaler Remission.

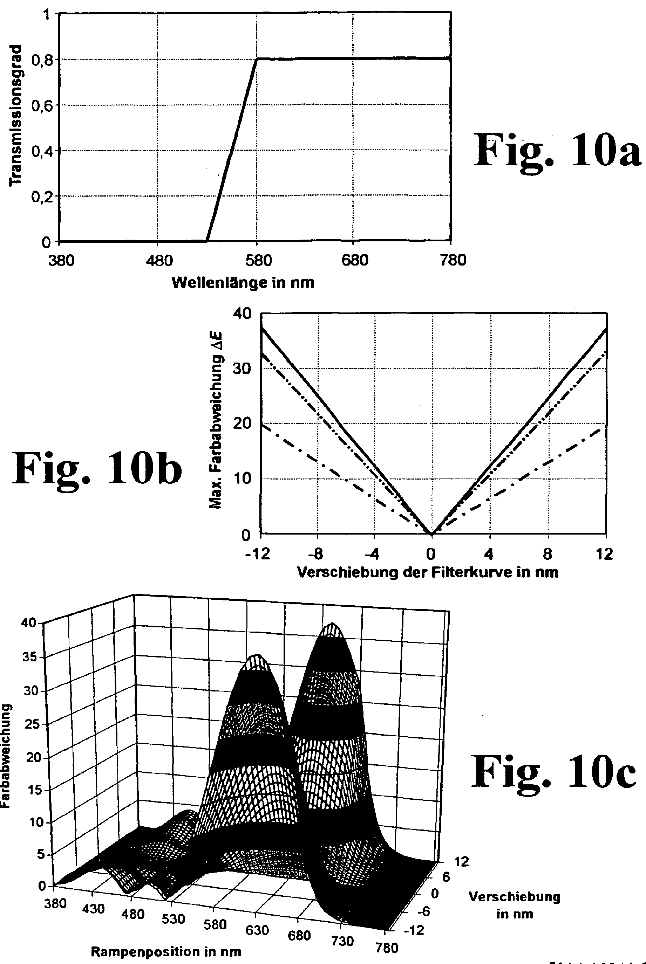

Für dieses dritte Beispiel wird unter Verwendung der Normallichtart D65 vorausgesetzt, dass außer einer Skalierung keine Korrektur der Messwerte vorgenommen wird. Der Übergangsbereich der Rampenfunktion wird mit 50 nm Breite vorgegeben und seine Mittenposition (nachfolgend Rampenposition genannt), die in Fig. 10a bei 555 nm Fig. 10a gezeigt ist, über das gesamte sichtbare Spektrum variiert.

Es zeigt sich wiederum eine maximale Farbabweichung ΔE im CIELAB-Raum bei Verschiebung der X-, Y- und Z-Filterkurve. Im Gegensatz zu schmalbandigen Farbreizen tritt hier für jede X-Filter-Verschiebung lediglich ein deutliches Maximum der Farbabweichung bei ca. 630 nm auf, wie es Fig. 10b erkennbar ist. Bei Y-FilterVerschiebung liegt das Maximum bei 605 nm und bei Z-Filter-Verschiebung bei 475 nm (nicht als separat dargestellt). Dies entspricht wieder den Wendepunkten der fallenden Kanten der idealen Filterkurven (aus Fig. 2). Bezüglich des X-Filters gibt es nur zur rechten fallenden Flanke des X-Filters einen passenden Höchstwert, wie es aus Fig. 10c zu entnehmen ist.

Insgesamt ist die Farbabweichung wesentlich geringer als bei schmalbandigen Farbreizen.

Viertes Beispiel

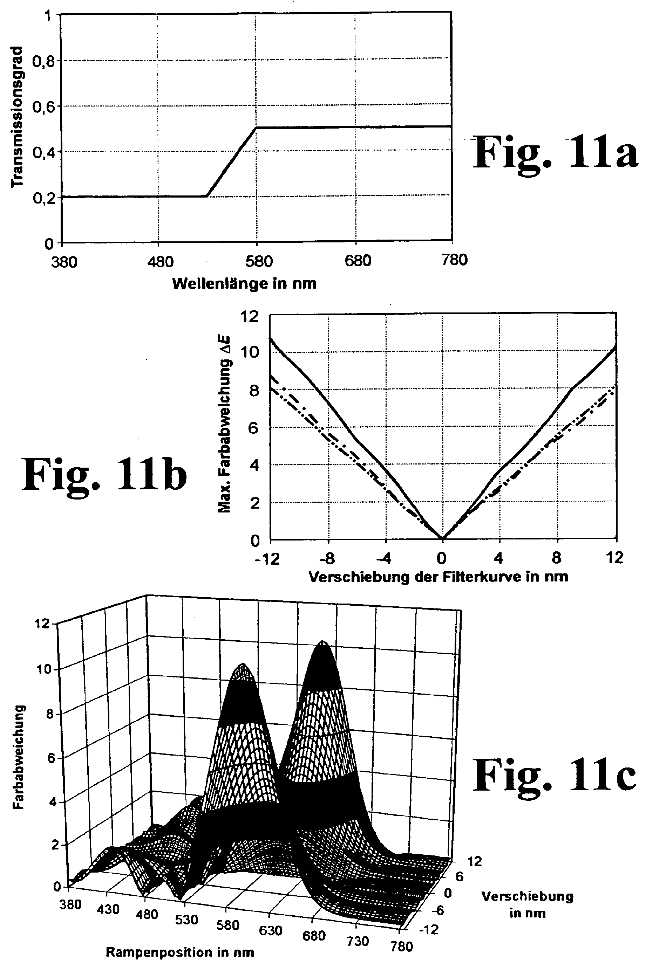

Als weiteres Beispiel wird eine flachere Rampenfunktion (geringer Farbkontrast) gemäß Fig. 11 a untersucht, indem erneut die Rampenposition mit einem Übergangsbereich von 50 nm über das gesamte sichtbare Spektrum variiert. In diesem Fall ist die maximale Farbabweichung ΔE im CIELAB-Raum dadurch gekennzeichnet, dass sich wegen der reduzierten Farbsättigung gemäß Fig. 11b die empfindungsadaptierten Farbabweichungen deutlich verringern. Fig. 11c zeigt dazu etwa dasselbe qualitative Verhalten wie Fig. 10c, aber kleiner Beträge der Fehler.

Schlussfolgernd kann also festgestellt werden, dass sich die empfundenen Farbabweichungen mit zunehmender Bandbreite und abnehmender Sättigung verringern.

Im relevanten Bereich ($\pm 12$ nm) von auftretenden Verschiebungen der idealen Filterfunktion, der infolge herstellungsbedingter Abweichungen der Schichtdicken der Interferenzfilter 21, 22 und 23 von den theoretisch berechneten Schichtdicken d einkalkuliert werden muss, kann zwischen Filterkurvenverschiebung und Farbabweichung eine lineare Abhängigkeit angenommen werden. Damit ergibt sich die Möglichkeit der Beschränkung auf eine lineare (differentielle) Toleranzrechnung, soweit dies aus Gründen der geforderten Genauigkeit der Farbmessung erforderlich ist.

In den obigen Beispielen wurden die zu erwartenden Messfehler anhand ausgewählter Remissions- bzw. Transmissionsverläufe analysiert. Die Frage, welche Farbreizfunktion zu maximalen Messfehlern führt (kritischer Remissionsverlauf), ist damit noch nicht beantwortet. Eine echte, von der Applikation unabhängige Worst-Case-Betrachtung ist jedoch nur auf der Grundlage der kritischen Farbreize möglich.

Die Theorie dazu ist anspruchsvoll und wird im Folgenden nur grob skizziert. Für die Verschiebung AE eines Farbwertes im CIELAB-Raum gilt

$$\Delta E = \sqrt{(\Delta L^*)^2 + (\Delta a^*)^2 + (\Delta b^*)^2} \qquad (1)$$

mit den Abweichungen $\Delta L^*, \Delta a^*, \Delta b^*$ der Farbkoordinaten, bedingt durch fehlerhafte spektrale Sensorempfindlichkeiten. Wir setzen voraus, dass alle Abweichungen vom Idealzustand differentiell klein sind, so dass lineare Fehlerfortpflanzung vorliegt. Weiter wird angenommen, dass sich die Fehler der spektralen Sensorempfindlichkeiten durch eine überschaubare Zahl von Kurvenparametern $t_1, t_2, ..., t_n$ beschreiben lässt. Die bisher verwendeten drei Parameter (Kurvenverschiebungen) reichen vorerst aus, wenn die Transmissionsverläufe der Filter nicht durch weitere Fertigungsfehler (außer den Schichtdicken) erheblich gestört werden. Unter den genannten Voraussetzungen folgt aus Gleichung (1)

$$\Delta E = \sqrt{\sum_{k=1}^{n}\left(\left(\frac{\partial L^*}{\partial t_k}\right)^2 + \left(\frac{\partial a^*}{\partial t_k}\right)^2 + \left(\frac{\partial b^*}{\partial t_k}\right)^2\right)(\Delta t_k)^2} \ . \qquad (2)$$

Eine maximale Verschiebung $\Delta E$ kann nur dann auftreten, wenn alle Einzelfehler $\Delta t_k$ (vorausgesetzt, dass die Einzelfehler unabhängig voneinander sind) ihren vorzugebenden Maximalwert annehmen:

$$\Delta E_{max} = \sqrt{\sum_{k=1}^{n}\left(\left(\frac{\partial L^*}{\partial t_k}\right)^2 + \left(\frac{\partial a^*}{\partial t_k}\right)^2 + \left(\frac{\partial b^*}{\partial t_k}\right)^2\right)(\Delta t_{k,max})^2} \,. \qquad (3)$$

Die CIELAB-Farbkoordinaten sind differenzierbare Funktionen der Normfarbwerte $X, Y, Z$. Schreibt man ausnahmsweise $X = X_1$, $Y = X_2$, $Z = X_3$, so erhält man aus Gleichung (3)

$$\Delta E_{max} = \sqrt{\sum_{k=1}^{n}\sum_{j=1}^{3}\left(\left(\frac{\partial L^*}{\partial X_j}\right)^2 + \left(\frac{\partial a^*}{\partial X_j}\right)^2 + \left(\frac{\partial b^*}{\partial X_j}\right)^2\right)\left(\frac{\partial X_j}{\partial t_k}\Delta t_{k,max}\right)^2} \,. \qquad (4)$$

In dieser Formel sind nur noch die Terme $\partial X_j / \partial t_k$ unbekannt. Mit den Normspektralwerten $\bar{x} = \bar{x}_1$, $\bar{y} = \bar{x}_2$, $z = x3$ sowie der Farbreizfunktion $\varphi$ gilt:

$$\frac{\partial X_j}{\partial t_k} = \int_{380\,nm}^{780\,nm} \varphi(\lambda)\frac{\partial x_j(\lambda, t_1, ..., t_n)}{\partial t_k}d\lambda, \qquad \forall k \in \{1, ..., n\}, \quad \forall j \in \{1, 2, 3\} \,. \qquad (5)$$

Der Normspektralwert von $\bar{x}_j$ setzt sich multiplikativ zusammen aus der Filtertransmission $T_j$ (Sollwert) und der Basisempfindlichkeit $S$ des Sensors. Für Körperfarben lässt sich $\varphi$ als Produkt aus dem Lichtquellenspektrurn $\varphi_B$ und dem spektralen Remissionsgrad $\beta$ darstellen. Damit folgt aus (Gleichung 5):

$$\frac{\partial X_j}{\partial t_k} = \int_{380\,nm}^{780\,nm} \beta(\lambda)\varphi_B(\lambda)S(\lambda)\frac{\partial T_j(\lambda, t_1, ..., t_n)}{\partial t_k}d\lambda, \qquad \forall k \in \{1, ..., n\}, \quad \forall j \in \{1, 2, 3\} \,. \qquad (6)$$

Es gilt nun, eine Funktion $\beta(\lambda)$ so zu finden, dass mittels Gleichung (6) die rechte Seite von (4) maximiert wird. Wegen $0 \le \beta(\lambda) \le 1$ existiert eine Lösung dieser Variationsaufgabe.

Der Lösungsansatz besteht darin, die gesuchte Funktion $\beta$ zu diskretisieren, indem man das Integral in Gleichung (6) durch die Näherungssumme ersetzt. Dadurch wird die Variationsaufgabe in ein nichtlineares Optimierungsproblem mit z.B. 81 freien Parametern überführt (bei einem Stützstellenabstand von 5 nm). Ohne a-prioriWissen ist jedoch eine solche Aufgabe nur lokal durch Iterationsverfahren lösbar. Es bleibt somit ungewiss, ob eine der lokalen Lösungen mit dem globalen Optimum übereinstimmt. Es ist jedoch abhebbar, dass sich ein kritischer Remissionsverlauf nicht für obige Modellfunktionen (schmalbandige und rampenförmige Farbreize) oder einfache Kombinationen davon ergibt.

Vorstehend wurden die Messergebnisse eines erfindungsgemäßen Dreibereichssensors, der die oben beschriebenen Anforderungen (Aufgabe) erfüllt, anhand von Testfarbreizen simuliert, die durch einige praktisch relevante Modellfunktionen (Modelltargets) erzeugt wurden.

Jeder dieser Testfarbreize enthielt einen freien Parameter, der praktisch kontinuierlich variiert wurde (Schwerpunktwellenlänge bzw. Rampenposition).

Als grundsätzliche Methode wurde die Simulation und farbmetrische Bewertung der Messergebnisse bei Variation von geeignet gewählten Modellparametern verwendet. Im Vordergrund stand dabei die Fehleranalyse bei Variation (herstellungsbedingten Abweichungen) der Filterfunktionen, nicht die Korrektur von systematischen Messfehlern.

Zu den systematischen Messfehlern des erfindungsgemäßen Sensors ist kurz anzumerken, dass diese in ungünstigen Fällen eine Größenordnung zu hoch sind für eine präzise Messung von Farbwerten ("true color"). Eine Verringerung der Schichtdickentoleranzen des Interferenzfilters auf etwa 1 % ändert an dieser Situation nur sehr wenig. Daher ist zusätzlich eine exemplarabhängige Korrektur der Messfehler durch Software sinnvoll. Es ist festzustellen, dass mit einer globalen linearen Korrektur (Matrizierung) bereits deutliche Verbesserungen erreicht werden.

Falls eine gleichmäßige und genaue Korrektur des gesamten Farbraumes erforderlich ist, kann man bei Bedarf auf eine lokale lineare Korrektur zurückgreifen. Darunter versteht man die Zerlegung des Farbraumes in Tetraeder und Anwendung einer getrennten linearen Korrektur auf jeden Tetraeder, wobei an den Grenzflächen stetige Übergangsbedingungen einzuhalten sind. Dieser (pessimistische) Ansatz hat jedoch nur für sehr anspruchsvolle Farbmessaufgaben seine Bedeutung, nämlich wenn mit der Annäherung der XYZ-Kurven die Ausgabe genauer Farbmaßzahlen zu realisieren ist.

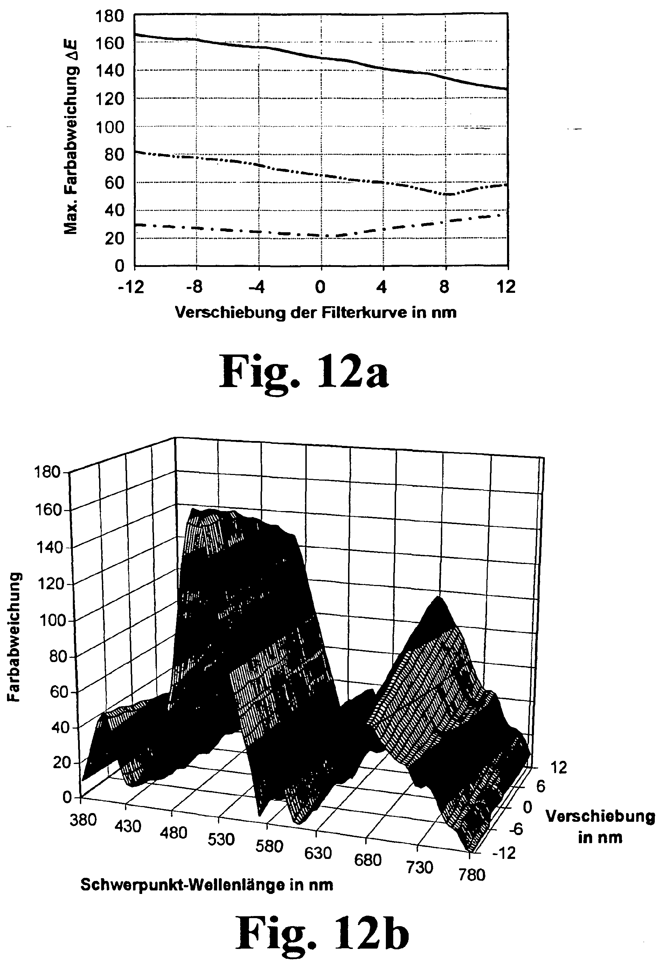

Die Simulationen zur Auswirkung von Farbverschiebungen bei den erfindungsgemäßen Filterfunktionen X, Y, Z der Interferenzfilter 21, 22 und 23 zeigen aber im direkten Vergleich zu den "alten" Filterfunktionen (Rot-, Grün-, Blau-Bandpässe) von Dreibereichssensoren, dass der erfindungsgemäße Photosensor zur Farbmessung auch ohne Messwertkorrektur zu deutlich geringeren Messfehlern führt als bisherige Farbsensoren mit herkömmlichen RGB-Filtersystemen. Wenn man z.B. die Farbabweichung mit herkömmlichen Filtern in der gleichen Weise berechnet, erhält man Ergebnisse, die deutlich größere Maximalabweichungen ergeben (Fig. 12a und 12b im Vergleich zu den erfindungsgemäßen Ergebnissen nach den Fig. 8b und 8c).

Aus Fig. 12a ist abzulesen, dass die maximalen Fehler bei der bisherigen Filtervariante die erfindungsgemäße Lösung um etwa den Faktor 4 übersteigen. Noch aussagekräftiger ist aber der Vergleich von Fig. 12b mit Fig. 8c. Während für die betrachteten schmalbandigen Reize bei den neuen Filterkurven ein Fehler von 20 nur für extreme Toleranzen und nur in einem relativ kleinen Bereich von Mittenwellenlängen überschritten wird, sinken die Fehler bei den bisherigen Filterkurven nur bei ca. 580 nm und bei 625 nm in sehr kleinen Frequenzintervallen unter diesen Wert ab. Auch die maximalen Abweichungen der neuen Filtervariante, die quasi nur bei 8 speziellen Messsituationen (Verschiebung, Wellenlänge) auftreten, werden für schmalbandige Reize nahezu immer wesentlich übertroffen. Obwohl wegen der unendlichen Vielfalt möglicher spektraler Reize allgemeine quantitative Aussagen schwer fallen, dürfte mit dem erfindungsgemäßen Farbsensor trotzdem ein klarer Qualitätssprung gelungen sein. Die lokale lineare Korrektur ist noch weiterentwicklungsfähig und kann noch tiefgründiger werden, um in einer Vielzahl von Anwendungsfällen Sensorspezifikationen mit Spitzenparametern zu erstellen. Anhand der bisher ausgewählten und weiterer Modellfarbreize kann weiterhin simuliert werden, wie sich die Qualität der Messergebnisse durch globale lineare Korrektur verbessern lassen. Hierbei ist das Optimierungskriterium sorgfältig nach den zu lösenden Messaufgaben festzulegen.

Die bisherigen Ergebnisse zeigen jedoch bereits deutlich, dass ein linearer Ansatz für die Einzelfehler sowie lineare Superposition ausreichen.

Aufgrund des so belegten Linearitätsansatzes ist es möglich, aus vorgegebenen maximalen Messfehlern die maximalen Fertigungstoleranzen für die Filtersysteme zur Annäherung an die Normspektralfunktion des menschlichen Auges zu berechnen und bei der Fertigung einzustellen.

Bezugszeichenliste

| | |
|---|---|
| 1 | Sensorchip |
| 11 | Teilflächen |
| 12 | Tripelelemente |
| 2 | Interferenzfilterstruktur |
| 21 | Interferenzfilter (X) |
| 22 | Interferenzfilter (Y) |
| 23 | Interferenzfilter (Z) |
| 24 | Stege |
| 3 | Gehäuse |
| 31 | Eintrittsfenster |
| 32 | Infrarotfilter |
| 4 | Anschlusselektroden |
| 41 | Katode |
| 42 | Anoden |
| S | Basisempfindlichkeit |
| X, Y, Z | Filterfunktionen/Filtercharakteristiken |

**Patentansprüche**

1. Photosensor zur Farbmessung auf Basis von drei Spektralanteilen, zu deren Erfassung ein Sensorchip mindestens drei durch eine vorgelagerte Interferenzfilterstruktur unterschiedlich spektral empfindliche Teilflächen mit dazwischen liegenden passiven Stegen aufweist, wobei die Interferenzfilterstruktur drei unterschiedliche Wechselschichtsysteme aus Siliziumdioxid und Titandioxid zum selektiven Transmittieren einfallenden Lichts in die unterschiedlichen Teilflächen des Sensorchips beinhaltet und die Teilflächen separate Farbmesswerte bereitstellen, **dadurch gekennzeichnet, dass**

- die mit unterschiedlichen Interferenzfiltern (21, 22, 23) bedeckten Teilflächen (11), die an die Normspektralfunktionen des menschlichen Auges für drei verschiedene Koordinaten eines normierten Farbraumes angepasst sind, jeweils kreissektorförmig um einen Zentralpunkt verteilt sind, um für einen dem Zentralpunkt zugeordneten Ort einfallenden Lichts ein Tripelfarbsegment zur Erfassung der drei Farbkoordinaten des Farbraumes zu bilden, und
- jedes Interferenzfilter (21; 22; 23) ein in seiner Transmissionscharakteristik über die Wellenlänge des spektral zu messenden Lichts der Empfindlichkeit des menschlichen Auges derart angepasst ist, dass das Produkt aus Basisempfindlichkeit des Photosensors und Transmission des Interferenzfilters (21; 22; 23) proportional dem Normalspektralwertverlauf des menschlichen Auges für die betreffende Koordinate des Farbraumes ist, so dass die durchgelassenen Spektralanteile in den Teilflächen (11) Messwerte erzeugen, die bei einfacher Skalierung zueinander in Spektralfarbwerte im normierten Farbraum umsetzbar sind.

2. Photosensor nach Anspruch 1, **dadurch gekennzeichnet, dass** die Transmissionscharakteristik für jede unterschiedlich empfindliche Teilfläche des Sensorchip als computersimuliertes Wechselschichtsystem mit unterschiedlichen Schichtdicken aus $TiO_2$ und $SiO_2$ mit einer Toleranz der Schichtdicken von höchstens 2% hergestellt ist.

3. Photosensor nach Anspruch 2, **dadurch gekennzeichnet, dass** zur Kompensation von herstellungsbedingten Schichtdickenabweichungen eine Einrichtung zur linearen Korrektur der von den Teilflächen ausgegebenen Messwerte vorhanden ist.

4. Photosensor nach Anspruch 3, **dadurch gekennzeichnet, dass** die Einrichtung zur linearen Korrektur der ausgegebenen Messwerte eine globale Matrizierung beinhaltet.

5. Photosensor nach Anspruch 3, **dadurch gekennzeichnet, dass** die Einrichtung zur linearen Korrektur der ausgegebenen Messwerte eine lokale Matrizierung für den gewählten Farbraum beinhaltet.

6. Photosensor nach Anspruch 1, **dadurch gekennzeichnet, dass** die Interferenzfilter direkt auf Halbleiterdioden des Sensorchip aufgebracht sind.

7. Photosensor nach Anspruch 6, **dadurch gekennzeichnet, dass** die Interferenzfilter direkt auf Siliziumdioden des Sensorchip aufgebracht sind.

8. Photosensor nach Anspruch 7, **dadurch gekennzeichnet, dass** die Interferenzfilter auf Si-Dioden, die in einer speziell für den visuellen Spektralbereich angepassten PIN-Dioden-Technologie hergestellt wurden, aufgebracht sind.

9. Photosensor nach Anspruch 7, **dadurch gekennzeichnet, dass** die Interferenzfilter auf Si-Dioden, die in einer speziell für den visuellen Spektralbereich angepassten CMOS-Technologie hergestellt wurden, aufgebracht sind.

10. Photosensor nach Anspruch 6, **dadurch gekennzeichnet, dass** die Interferenzfilter direkt auf einem Sensorchip mit Germaniumdioden aufgebracht sind.

11. Photosensor nach Anspruch 6, **dadurch gekennzeichnet, dass** die Interferenzfilter direkt auf einem Sensorchip mit Dioden auf Basis von InGaAs aufgebracht sind.

12. Photosensor nach Anspruch 1, **dadurch gekennzeichnet, dass** die Interferenzfilter über den Halbleiterdioden des Sensorchip auf einer separaten Glasplatte aufgebracht sind.

13. Photosensor nach Anspruch1, **dadurch gekennzeichnet, dass** die mit angepassten Interferenzfiltern bedeckten, unterschiedlich empfindlichen Teilflächen auf dem Sensorchip als Kreisflächendrittel geformt und um einen Zentralpunkt angeordnet sind.

**14.** Photosensor nach Anspruch 1, **dadurch gekennzeichnet, dass** die mit den angepassten Interferenzfiltern bedeckten, unterschiedlich empfindlichen Teilflächen auf dem Sensorchip als Kreisflächensektoren unterschiedlichen Flächeninhalts um einen Zentralpunkt angeordnet sind, wobei die unterschiedlichen Flächeninhalte darauf abgestimmt sind, dass eine niedrigere Basisempfindlichkeit einer Teilfläche, die aufgrund eingeschränkter Wellenlängen-Transmission des zugehörigen Interferenzfilters zustande kommt, durch einen entsprechend größeren Flächeninhalt der Teilfläche des Photosensors kompensiert wird.

**15.** Photosensor nach Anspruch 1, **dadurch gekennzeichnet, dass** die aufgrund angepasster Interferenzfilter unterschiedlich empfindlichen Teilflächen auf dem Sensorchip als Rhomben mit 120°-Winkel geformt und um einen Zentralpunkt angeordnet sind, so dass sie als ein Tripelfarbsegment ein regelmäßiges Sechseck bilden.

**16.** Photosensor nach Anspruch 15, **dadurch gekennzeichnet, dass** die Tripelfarbsegmente jeweils um eine Vielzahl von Zentralpunkten mit gleichen Stegen und gleichverteilt geordnet auf dem Sensorchip aufgebracht sind, so dass die Tripelfarbsegmente wabenförmig angeordnet sind, wobei Teilflächen gleicher spektraler Empfindlichkeit keine benachbarten Seitenkanten miteinander haben.

**Claims**

**1.** Photosensor for colour measurement based on three spectral components, comprising a sensor chip having at least three partial surfaces of different spectral sensitivities with passive webs located therebetween for detecting the three spectral components through a preceding interference filter structure, wherein the interference filter structure contains three different alternating layer systems of silicon dioxide and titanium dioxide for selective transmission of incident light into the different partial surfaces of the sensor chip and the partial surfaces provide separate colour measurement values, **characterized in that**

- the partial surfaces (11) covered by different interference filters (21, 22, 23), being adapted to the normal spectral functions of the human eye for three different coordinates of a normalized colour space, are arranged so as to be distributed in a circle-sector-shaped manner around a central point, in order to form a tricolour segment for a location of incident light associated with the central point for detecting the three colour coordinates of the colour space, and
- the transmission characteristic of each interference filter (21; 22; 23) over the wavelength of the light to be measured spectrally is adapted to the sensitivity of the human eye in such a way that the product of the base sensitivity of the photosensor and the transmission of the interference filter (21; 22; 23) is proportional to the normal spectral value curve of the human eye for the relevant coordinate of the colour space, so that the passed spectral components generate measurement values in the partial surfaces (11), which measurement values can be converted into spectral colour values with simple scaling relative to one another in the normalized colour space.

**2.** Photosensor according to claim 1, **characterized in that** the transmission characteristic for each partial surface of the sensor chip having different sensitivities is produced as a computer-simulated alternating layer system with different layer thicknesses of $TiO_2$ and $SiO_2$ with a tolerance of the layer thicknesses of at most 2%.

**3.** Photosensor according to claim 2, **characterized in that** an arrangement is provided for linear correction of the measurement values put out by the partial surfaces to compensate for deviations in layer thickness caused by manufacture.

**4.** Photosensor according to claim 3, **characterized in that** the arrangement for linear correction of the output measurement values involves a global matrixing.

**5.** Photosensor according to claim 3, **characterized in that** the arrangement for linear correction of the output measurement values involves a local matrixing for the selected colour space.

**6.** Photosensor according to claim 1, **characterized in that** the interference filters are arranged directly on semiconductor diodes of the sensor chip.

**7.** Photosensor according to claim 6, **characterized in that** the interference filters are arranged directly on silicon diodes of the sensor chip.

8. Photosensor according to claim 7, **characterized in that** the interference filters are arranged on Si diodes which were produced by PIN diode technology specially adapted for the visual spectral region.

9. Photosensor according to claim 7, **characterized in that** the interference filters are arranged on Si diodes which were produced by CMOS technology specially adapted for the visual spectral region.

10. Photosensor according to claim 6, **characterized in that** the interference filters are arranged directly on a sensor chip with germanium diodes.

11. Photosensor according to claim 6, **characterized in that** the interference filters are arranged directly on a sensor chip with diodes based on InGaAs.

12. Photosensor according to claim 1, **characterized in that** the interference filters are arranged over the semiconductor diodes of the sensor chip on a separate glass plate.

13. Photosensor according to claim 1, **characterized in that** the partial surfaces on the sensor chip which are covered with adapted interference filters and have different sensitivities are shaped as thirds of a circle area and are arranged around a central point.

14. Photosensor according to claim 1, **characterized in that** the partial surfaces on the sensor chip which are covered with the adapted interference filters and have different sensitivities are arranged around a central point as sectors of a circle area with different surface contents, wherein the different surface contents are adapted in such a way that a lower base sensitivity of one partial surface which comes about because of limited wavelength transmission of the respective interference filter is compensated by a correspondingly greater surface content of the partial surface of the photosensor.

15. Photosensor according to claim 1, **characterized in that** the partial surfaces on the sensor chip which have different sensitivities because of adapted interference filters are shaped as rhombuses with a 120-degree angle and are arranged around a central point, so that they form a regular hexagon as a tricolour segment.

16. Photosensor according to claim 15, **characterized in that** the tricolour segments are arranged on the sensor chip so as to be uniformly distributed around a plurality of central points with identical webs, so that the tricolour segments are arranged in a honeycombed manner, wherein partial surfaces having identical spectral sensitivities do not share any adjacent lateral edges.

**Revendications**

1. Photo-capteur pour la mesure de couleur sur la base de trois composantes spectrales, comprenant une puce de capteur ayant au moins trois surfaces partielles de sensibilités spectrales différentes avec des âmes passives situées entre les surfaces partielles pour détecter les trois composantes spectrales à travers une structure de filtre d'interférence précédente, dans lequel la structure de filtre d'interférence contient trois systèmes différents de couches alternées de dioxyde de silicium et de dioxyde de titane pour la transmission sélective de lumière incidente dans les surfaces partielles différentes de la puce de capteur et les surfaces partielles fournissent des valeurs de mesure de couleur séparées, **caractérisé en ce que**

    - les surfaces partielles (11) couvertes de filtres d'interférence (21, 22, 23) différents, qui sont adaptées aux fonctions spectrales normales de l'oeil humain pour trois coordonnées différentes d'un espace de couleur normalisé, sont disposées de manière à être distribuées sous la forme de secteur circulaire autour d'un point central, afin de former un segment tricolore pour un lieu de lumière incidente associé au point central pour détecter les trois coordonnées de couleur de l'espace de couleur, et
    - la caractéristique de transmission de chaque filtre d'interférence (21 ; 22; 23) sur la longueur d'onde de la lumière à mesurer spectralement est adaptée à la sensibilité de l'oeil humain de telle façon que le produit de la sensibilité de base du photo-capteur et de la transmission du filtre d'interférence (21 ; 22; 23) est proportionnel à la courbe de valeur spectrale normale de l'oeil humain pour la coordonnée concernée de l'espace de couleur, de façon que les composantes spectrales passées génèrent des valeurs de mesure dans les surfaces partielles (11), qui peuvent être converties en valeurs de couleur spectrale lors d'une mise à l'échelle simple les unes par rapport aux autres dans l'espace de couleur normalisé.

**2.** Photo-capteur selon la revendication 1, **caractérisé en ce que** la caractéristique de transmission pour chaque surface partielle de la puce de capteur ayant des sensibilités différentes est produite en tant que système de couches alternées simulé par ordinateur ayant des épaisseurs de couche différentes de $TiO_2$ et $SiO_2$ avec une tolérance des épaisseurs de couche d'au plus 2%.

**3.** Photo-capteur selon la revendication 2, **caractérisé en ce qu'**un dispositif est prévu pour la correction linéaire des valeurs de mesure émises par les surfaces partielles pour compenser les écarts des épaisseurs de couche dus à la fabrication.

**4.** Photo-capteur selon la revendication 3, **caractérisé en ce que** le dispositif pour la correction linéaire des valeurs de mesure émises comporte un matriçage global.

**5.** Photo-capteur selon la revendication 3, **caractérisé en ce que** le dispositif pour la correction linéaire des valeurs de mesure émises comporte un matriçage local pour l'espace de couleur sélectionné.

**6.** Photo-capteur selon la revendication 1, **caractérisé en ce que** les filtres d'interférence sont disposés directement sur des diodes à semi-conducteurs de la puce de capteur.

**7.** Photo-capteur selon la revendication 6, **caractérisé en ce que** les filtres d'interférence sont disposés directement sur des diodes au silicium de la puce de capteur.

**8.** Photo-capteur selon la revendication 7, **caractérisé en ce que** les filtres d'interférence sont disposés sur des diodes au Si qui ont été fabriquées par une technologie de diode PIN spécifiquement adaptée pour la zone spectrale visible.

**9.** Photo-capteur selon la revendication 7, **caractérisé en ce que** les filtres d'interférence sont disposés sur des diodes au Si qui ont été fabriquées par une technologie CMOS spécifiquement adaptée pour la zone spectrale visible.

**10.** Photo-capteur selon la revendication 6, **caractérisé en ce que** les filtres d'interférence sont disposés directement sur une puce de capteur ayant des diodes au germanium.

**11.** Photo-capteur selon la revendication 6, **caractérisé en ce que** les filtres d'interférence sont disposés directement sur une puce de capteur ayant des diodes sur la base de InGaAs.

**12.** Photo-capteur selon la revendication 1, **caractérisé en ce que** les filtres d'interférence sont disposés sur les diodes à semi-conducteurs de la puce de capteur sur une plaque de verre séparée.

**13.** Photo-capteur selon la revendication 1, **caractérisé en ce que** les surfaces partielles sur la puce de capteur qui sont couvertes de filtres d'interférence adaptés et qui ont des sensibilités différentes sont sous la forme de tiers d'une surface circulaire et sont disposées autour d'un point central.

**14.** Photo-capteur selon la revendication 1, **caractérisé en ce que** les surfaces partielles sur la puce de capteur qui sont couvertes des filtres d'interférence adaptés et qui ont des sensibilités différentes sont disposées autour d'un point central en tant que secteurs d'une zone circulaire aux aires différentes, dans lequel les aires différentes sont adaptées de telle manière qu'une sensibilité de base plus faible d'une surface partielle qui provient d'une transmission de longueur d'onde limitée du filtre d'interférence respectif est compensée donc par une aire plus grande de la surface partielle du photo-capteur.

**15.** Photo-capteur selon la revendication 1, **caractérisé en ce que** les surfaces partielles sur la puce de capteur qui ont des sensibilités différentes dû aux filtres d'interférence adaptés sont sous la forme de rhombes avec un angle de 120 degrés et sont disposées autour d'un point central, de façon qu'ils forment un hexagone régulier en tant que segment tricolore.

**16.** Photo-capteur selon la revendication 15, **caractérisé en ce que** les segments tricolores sont disposés sur la puce de capteur de manière à être distribués uniformément autour d'une pluralité de points centraux avec des âmes identiques, de façon que les segments tricolores sont disposés en nid d'abeilles, des surfaces partielles de sensibilité spectrale identique ne partageant aucuns bords latéraux adjacents.

**Fig. 1**

Fig. 2

**Spektrale Empfindlichkeit Basis-PIN-Diode**

**Fig. 3**

**Spektrale Empfindlichkeit der Farbsensoren**

**Fig. 4**

**Fig. 5**

**Fig. 6**

Filter X

n

**Fig. 7a**

d (nm)

0    500    1000    1500    2000    2500    3000    3500    4000

Fig. 7b

Filter Y

Filter Z

**Fig. 7c**

d (nm)

n

**Fig. 8a**

**Fig. 8b**

**Fig. 8c**

**Fig. 9a**

**Fig. 9b**

**Fig. 9c**

Fig. 10a

Fig. 10b

Fig. 10c

Fig. 11a

Fig. 11b

Fig. 11c

**Fig. 12a**

**Fig. 12b**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19638693
- US 3996461 A

- US 5246803 A